# EUROPÄISCHE PATENTSCHRIFT

(11) **EP 3 847 061 B1**
(45) Veröffentlichungstag und Bekanntmachung des Hinweises auf die Patenterteilung: **19.04.2023**
(21) Anmeldenummer: 19759579.6
(22) Anmeldetag: 28.08.2019
(51) Int. Cl.: B60T 8/1763, B60T 8/1764

(54) **VERFAHREN UND SYSTEM ZUR ABSCHÄTZUNG VON REIBWERTEN**
METHOD AND SYSTEM FOR ESTIMATING FRICTION COEFFICIENTS
PROCÉDÉ ET SYSTÈME D'ESTIMATION DE COEFFICIENTS DE FROTTEMENT

(30) Priorität: 04.09.2018 DE 102018215033
(43) Veröffentlichungstag der Anmeldung: 14.07.2021
(73) Patentinhaber: VOLKSWAGEN AKTIENGESELLSCHAFT, 38440 Wolfsburg (DE)
(72) Erfinder: RIELING, Jörg, 38116 Braunschweig (DE)
(86) Internationale Anmeldenummer: PCT/EP2019/072943
(87) Internationale Veröffentlichungsnummer: WO 2020/048841

(56) Entgegenhaltungen:
- DE-A1-102007 019 697
- DE-A1-102008 017 478
- DE-A1-102013 226 997
- DE-A1-102014 008 374
- DE-A1-102016 220 692
- DE-B3-102017 109 649
- US-A1- 2005 033 499
- US-A1- 2018 229 699

## Beschreibung

Die vorliegende Erfindung betrifft ein Verfahren sowie ein System zur Abschätzung von Reibwerten der Räder eines Kraftfahrzeugs.

Für viele heute im Fahrzeug verbaute Systeme ist es wichtig zu wissen, wie viel Kraft die Räder zu einem gegebenen Zeitpunkt auf die Straße übertragen können, d.h. wie groß die aktuellen Reibwerte der Räder eines Kraftfahrzeugs sind. Die Kenntnis des Reibwerts spielt hierbei zum Beispiel für Schlupfregelsysteme, aber auch für Sicherheitssysteme, wie ein automatisches Notbremssystem, eine Ausweichunterstützung oder die Steuerung von Allradsystemen eine Rolle.

Der aktuelle Reibwert wird hierbei in verschiedenen Steuergeräten fortlaufend geschätzt, indem der Radschlupf bei gegebener Radkraft, beispielsweise bei gegebenem Radmoment, beobachtet wird. Diese Schätzung des Reibwerts funktioniert dann besonders gut, wenn das Fahrzeug eine gewisse Zeit mit konstanter Radkraft fährt und Messpunkte über einen möglichst weiten Radkraftbereich in die Schätzung einfließen.

Die Druckschrift DE 10 2008 017 478 A1 betrifft ein Verfahren zum Betrieb einer Fahrzeugbremsanlage sowie eine Fahrzeugbremsanlage. Hierbei ist es die Aufgabe der betreffenden Druckschrift, ein Verfahren zum Betrieb einer Fahrzeugbremsanlage zur Verfügung zu stellen, durch das ein Überbremsen der Hinterachse und somit ein Verlust an Fahrstabilität des Kraftfahrzeugs verhindert wird, wobei die Fahrstabilität aus den an den Rädern anliegenden Reibwerten bestimmt wird. Verfahren zur Bestimmung von Reibwerten der Räder eines Kraftfahrzeugs sind ferner aus den Druckschriften DE 10 2014 008 374 A1, DE 10 2017 109 649 B3, DE 10 2016 220 692 A1, DE 10 2007 019 697 A1, US 2018/229699 A1, US 2005/033499 A1 und DE 10 2013 226 997 A1 bekannt.

Problematisch bezüglich der Schätzung von Reibwerten ist hierbei, dass in der Praxis viel zu selten hinreichend stationäre Verhältnisse über einen hinreichend großen Radkraftbereich vorliegen, um eine zeitlich aktuelle Schätzung von Reibwerten zuverlässig zu ermöglichen.

Es ist daher die Aufgabe der vorliegenden Erfindung, die voranstehend beschriebenen Nachteile zumindest teilweise zu beheben, insbesondere ist es die Aufgabe der vorliegenden Erfindung, eine schnelle, aktuelle und qualitativ hochwertige Schätzung eines Reibwertes der Räder eines Kraftfahrzeugs zu gewährleisten.

Die voranstehende Aufgabe wird gelöst durch ein Verfahren mit den Merkmalen des Anspruchs 1 sowie ein System gemäß Anspruch 8.

Weitere Merkmale und Details der Erfindung ergeben sich aus den Unteransprüchen, der Beschreibung und den Zeichnungen.

Die technischen Merkmale, die zu dem erfindungsgemäßen Verfahren offenbart werden, gelten dabei auch in Verbindung mit dem erfindungsgemäßen System und umgekehrt, sodass bezüglich der Offenbarung zu den einzelnen Erfindungsaspekten stets wechselseitig Bezug genommen wird bzw. werden kann. Zweckmäßige Ausgestaltungen der Erfindung sind in den abhängigen Ansprüchen ausgeführt.

Das erfindungsgemäße Verfahren zur Abschätzung von Reibwerten der Räder eines Kraftfahrzeugs kann hierbei vorzugsweise in einem Pkw oder einem Lastkraftwagen, aber auch in einem Bagger, einem Gabelstapler oder dergleichen eingesetzt werden. Voraussetzung hierfür ist, dass das Kraftfahrzeug zumindest zwei unabhängig voneinander betreibbare Achsen aufweist. Somit ist das erfindungsgemäße Verfahren zumindest für zweiachsige, aber ebenso auch für drei- oder mehrachsige Fahrzeuge geeignet.

Bei dem erfindungsgemäßen Verfahren zur Abschätzung von Reibwerten der Räder eines Kraftfahrzeugs mit zumindest zwei unabhängig voneinander betreibbaren Achsen erfolgt zunächst ein Festlegen zumindest einer Achse eines Kraftfahrzeugs als Beobachtungsachse sowie ein Festlegen zumindest einer von der Beobachtungsachse verschiedenen Achse des Kraftfahrzeugs als Kompensationsachse. Die Achsen eines Kraftfahrzeugs können hierbei vorzugsweise in vorbestimmten zeitlichen Abständen jeweils alternierend als Beobachtungsachse und als Kompensationsachse festgelegt werden, sodass die zunächst als Beobachtungsachse festgelegte Achse als Kompensationsachse und die zunächst als Kompensationsachse festgelegte Achse anschließend als Beobachtungsachse festgelegt wird. Auf diese Weise kann für jeden einzelnen Reifen eines Kraftfahrzeugs das erfindungsgemäße Verfahren angewendet werden, sodass für jeden einzelnen Reifen des Kraftfahrzeugs ein aktueller Reibwert ermittelt werden kann.

Nach dem Festlegen einer Beobachtungsachse und einer Kompensationsachse erfolgt gemäß dem gegenständlichen Verfahren ein Ändern zumindest eines Radmomentes an der Beobachtungsachse. Die Änderung erfolgt hierbei beispielsweise kontinuierlich, sodass das Radmoment an der Beobachtungsachse beispielsweise kontinuierlich erhöht oder erniedrigt wird.

Während der Änderung zumindest eines Radmomentes an der Beobachtungsachse erfolgt gemäß dem erfindungsgemäßen Verfahren ein Erfassen von Daten zur Abschätzung von aktuellen Reibwerten. Das Erfassen von Daten zur Abschätzung von aktuellen Reibwerten kann hierbei insbesondere mittels einer Detektionseinheit erfolgen. Die Detektionseinheit kann hierbei vorzugsweise Sensoren umfassen, die beispielsweise die aktuelle Drehzahl der Räder eines Kraftfahrzeugs oder dergleichen messen. Hierbei können insbesondere mehrere Sensoren an verschiedenen Positionen eines Kraftfahrzeugs angeordnet sein und vorzugweise unterschiedliche Daten erfassen. Im Rahmen einer kontinuierlichen Messwertaufnahme kann hierbei beispielsweise alle 100 ms, vorzugsweise alle 10 ms, insbesondere jede Millisekunde ein Messwert zur Abschätzung eines aktuellen Reibwertes erfasst werden.

Während der Änderung zumindest eines Radmomentes an der Beobachtungsachse und der gleichzeitigen Erfassung von Daten zur Abschätzung von aktuellen Reibwerten erfolgt gemäß dem gegenständlichen Verfahren gleichzeitig ein Anpassen zumindest eines Radmomentes an der Kompensationsachse, wobei das Anpassen des zumindest einen Radmomentes an der Kompensationsachse derart erfolgt, dass ein vorbestimmtes Gesamtradmoment während der Änderung des Radmomentes an der Beobachtungsachse erhalten bleibt. So wird während einer Änderung des Radmomentes an der Beobachtungsachse, das Radmoment an der Kompensationsachse auf Basis des gewünschten Gesamtradmomentes angepasst. Das Gesamtradmoment (bzw. Gesamtvortriebsmoment) ist die Summe der Radmomente der Einzelachsen. Hierbei ist die erfindungsgemäße Idee des gegenständlichen Verfahrens, das Gesamtradmoment unbeeinflusst zu lassen, damit das Fahrgefühl nicht beeinträchtigt wird. Dies erfolgt hierbei derart, dass das Gesamtradmoment bzw. die Summe der Radmomente von Beobachtungs- und Kompensationsachse einer vorgegebenen Größe folgt - beispielsweise einem aus dem Fahrpedal abgeleiteten Soll-Gesamtradmoment. Die Aufteilung dieses Gesamtradmoments erfolgt hierbei jedoch derart, dass auf der Beobachtungsachse eine feine Reibwertbestimmung durchgeführt werden kann.

Schließlich erfolgt gemäß dem erfindungsgemäßen Verfahren abschließend eine Abschätzung zumindest eines aktuellen Reibwertes auf Basis der erfassen Daten.

Mit Hilfe des erfindungsgemäßen Verfahrens ist es insbesondere möglich, eine schnelle, kontinuierliche, d.h. fortlaufend erfolgende und qualitativ hochwertige Schätzung eines Reibwertes von Rädern eines Kraftfahrzeugs zu gewährleisten, die es ermöglicht, Steuersystemen, wie beispielsweise Notbremssystemen, Fahrassistenzsystemen, automatischen Ausweichsystemen, Schlupfregelungssystemen oder elektronischen Stabilitätsprogrammen optimal zu arbeiten und womit das erfindungsgemäße Verfahren zu einem sicheren Fahren beiträgt.

Im Rahmen eines besonders flexiblen und anpassbaren Verfahrens zur Abschätzung von Reibwerten der Räder eines Kraftfahrzeugs kann erfindungsgemäß vorgesehen sein, dass die Änderung zumindest eines Radmomentes an der Beobachtungsachse innerhalb eines vorbestimmten Intervalls erfolgt. Hierbei ist insbesondere eine kontinuierliche Änderung des Radmomentes an der Beobachtungsachse innerhalb des vorbestimmten bzw. vorbestimmbaren Intervalls möglich. Das Intervall kann konstant sein oder auch vor der Durchführung des gegenständlichen Verfahrens ständig neu festgelegt werden. Bei einer regelmäßigen Festlegung des erfindungsgemäßen Intervalls kann die Größe des Intervalls vorzugsweise in Abhängigkeit des Gesamtradmomentes bzw. des Radmomentes auf der Beobachtungsachse oder in Abhängigkeit anderer messbarer bzw. abschätzbar dynamischer Größen variiert werden. Ferner ist es denkbar, dass das Durchstimmen eines bestimmten Intervalls abgebrochen werden kann, wenn beispielsweise schon vor der Beendigung des Intervalls ein Reibwert genügend genau abgeschätzt werden konnte oder beispielsweise der Fahrbetrieb eingestellt wurde.

Im Hinblick auf eine besonders hochwertige Schätzung eines Reibwertes der Räder eines Kraftfahrzeugs ist erfindungsgemäß ferner vorgesehen, dass die Änderung zumindest eines Radmomentes an der Beobachtungsachse stufenweise erfolgt, wobei die Stufen horizontale Abschnitte umfassen, an denen das Radmoment konstant ist. Die horizontalen Abschnitte entsprechen hierbei insbesondere Zeitabschnitten. Neben den horizontalen Abständen umfassen die Stufen vertikale Abschnitte, die vorzugsweise ein Radmoment bzw. einen Radmomentbereich repräsentieren. Im Rahmen des gegenständlichen Verfahrens kann hierbei vorgesehen sein, dass zusätzlich zu der Größe der horizontalen Abschnitte mit konstantem Radmoment auch die Größe der vertikalen Abschnitte der Stufen konstant und entweder dauerhaft vorbestimmt sein können oder auch vor der Durchführung des gegenständlichen Verfahrens festgelegt werden. Ebenfalls ist es diesbezüglich denkbar, dass die Größe der horizontalen Abschnitte und die Größe der vertikalen Abschnitte der Stufen während der Durchführung des gegenständlichen Verfahrens dynamisch, vorzugsweise in Abhängigkeit anderer messbarer bzw. abschätzbarer Größen variiert werden.

Um eine möglichst exakte und gleichzeitig aktuelle Schätzung eines Reibwertes von Rädern eines Kraftfahrzeugs zu gewährleisten, ist es denkbar, dass das Radmoment an der Beobachtungsachse stufenweise, in horizontalen Abschnitten von zumindest 1 Sekunde, vorzugsweise von zumindest 2 Sekunden, insbesondere von zumindest 3 Sekunden geändert wird, wobei die Änderung der vertikalen Abschnitte zumindest 2 %, vorzugsweise zumindest 5 %, insbesondere zumindest 10 % des vor Einleitung des Verfahrens messbaren Gesamtradmoments beträgt. Hinsichtlich der Änderung der vertikalen Abschnitte kann hierbei insbesondere eine dynamische Anpassung vorgesehen sein, beispielsweise, indem man die Gestaltung des Beobachtungsmoments so vornimmt, dass es den Forderungen eines Schätzverfahrens optimal entspricht. So können beispielsweise insbesondere die vertikalen Abschnitte, die für ein Schätzverfahren besonders relevant sind kleiner dimensioniert sein, so dass innerhalb dieser Abschnitte ein größerer Anteil von Messwerten ermittelt werden kann.

Im Rahmen eines flexiblen und einfach zu automatisierenden Verfahrens zur Schätzung eines aktuellen Reibwertes von Rädern eines Kraftfahrzeugs, kann erfindungsgemäß ferner vorgesehen sein, dass die Höhe und/oder die Breite der stufenweise Änderung des Radmomentes an der Beobachtungsachse, d.h. sowohl die horizontalen, als auch die vertikalen Abschnitte in Abhängigkeit des aktuellen Gesamtradmomentes variiert werden. Vorzugsweise kann die Höhe und/oder die Breite der stufenweisen Änderung des Radmomentes auch benutzerdefiniert festgelegt werden, beispielsweise ebenfalls in Abhängigkeit des aktuellen Radmomentes an der Beobachtungsachse.

Im Hinblick auf eine einfache Anpassung des zumindest einen Radmomentes an der Kompensationsachse an ein vorbestimmtes bzw. vorbestimmbares Gesamtradmoment während der Änderung des Radmomentes an der Beobachtungsachse, ist es von Vorteil, wenn die Summe des aktuellen Radmomentes an der Beobachtungsachse und des aktuellen Radmomentes an der Kompensationsachse das aktuell vorgegebene Soll-Gesamtradmoment ergeben.

Hierbei kann das Radmoment an der Beobachtungsachse auch derart geändert werden, dass der Betrag des Radmomentes an der Beobachtungsachse größer ist, als der Betrag des Gesamtradmomentes. Dies kann dann der Fall sein, wenn auf die Kompensationsachse ein entsprechendes negatives Moment wirkt, beispielsweise durch den Einfluss von Rekuperation oder einen Motor im Schleppbetrieb oder dergleichen.

Im Hinblick auf eine Anwendung des gegenständlichen Verfahrens zur Verbesserung der Fahrsicherheit innerhalb eines Kraftfahrzeugs kann erfindungsgemäß des Weiteren vorgesehen sein, dass auf Basis der erfassten Daten zur Abschätzung eines aktuellen Reibwertes eine Prognose zur Abschätzung eines aktuellen Zustands eines Kraftfahrzeugs mittels einer Verarbeitungseinheit erstellt wird. Ein aktueller Zustand eines Kraftfahrzeugs könnte hierbei insbesondere im Hinblick auf die Fahrsicherheit beurteilt werden. Hierbei ist es ebenfalls denkbar, dass neben einer Prognose zur Abschätzung eines aktuellen Zustands eine Prognose hinsichtlich eines zukünftigen Zustands eines Kraftfahrzeugs erstellt wird. Des Weiteren ist es denkbar, dass in Abhängigkeit der Prognose ein Betrieb eines Kraftfahrzeugs angepasst oder modifiziert wird. Hierbei kann es sinnvoll sein, insbesondere weitere Daten, wie Navigationsdaten und/oder Streckendaten und/oder kartographische Daten und/oder Daten aktueller Umgebungsbedingungen, wie beispielsweise die aktuelle Temperatur, die aktuelle Luft- bzw. Fahrbahnfeuchtigkeit, den aktuellen Umgebungsdruck und dergleichen zur Erstellung einer Prognose zu verwenden. Die einzelnen erfassten Daten können hierbei im Hinblick auf eine besonders hohe Aussagekraft vor der Erstellung einer Prognose gemittelt und/oder gewichtet und/oder anderen statistischen Datenauswertungsmethoden unterworfen werden. Hierbei können die einzelnen Schritte der Datenerfassung, die Erstellung einer Prognose und die Anpassung eines Betriebes insbesondere zyklisch wiederholt werden. Die Anpassung eines Betriebes eines Fahrzeugs kann hierbei vorteilhafterweise insbesondere erst ab dem Erreichen eines Grenzwertes aktiviert werden. Ebenfalls ist alternativ oder kumulativ zur Anpassung eines Betriebes in Abhängigkeit der Prognose die Aussendung bzw. Anzeige von Warnhinweisen denkbar.

Ebenfalls Gegenstand der Erfindung ist ein System zur Abschätzung von Reibwerten der Räder eines Kraftfahrzeugs mit den Merkmalen des unabhängigen Systemanspruchs. Hierbei umfasst das gegenständliche System zumindest eine Kontrolleinheit zur Festlegung zumindest einer Achse als Beobachtungsachse sowie einer von der Beobachtungsachse verschiedenen Achse als Kompensationsachse. Ferner umfasst das System zumindest eine Steuereinheit zur Änderung zumindest eines Radmomentes an der Beobachtungsachse sowie zur gleichzeitigen Anpassung zumindest eines Radmomentes an der Kompensationsachse. Des Weiteren umfasst das gegenständliche System zumindest eine Detektionseinheit zur Erfassung von Daten zur Abschätzung von aktuellen Reibwerten sowie zumindest eine Verarbeitungseinheit zur Abschätzung zumindest eines aktuellen Reibwertes auf Basis der erfassten Daten. Die Steuereinheit des gegenständlichen Systems ist hierbei ferner derart eingerichtet und innerhalb des Systems angeordnet, dass eine Anpassung des zumindest einen Radmomentes an der Kompensationsachse an ein vorbestimmtes Gesamtradmoment erfolgt. Im Hinblick auf eine besonders hochwertige Schätzung eines Reibwertes der Räder eines Kraftfahrzeugs ist erfindungsgemäß ferner vorgesehen, dass zumindest ein Radmoment an der Beobachtungsachse stufenweise änderbar ist, wobei die Stufen horizontale Abschnitte umfassen, an denen das Radmoment an der Beobachtungsachse konstant ist.

Damit bringt das erfindungsgemäße System die gleichen Vorteile mit sich, wie sie bereits ausführlich in Bezug auf das erfindungsgemäße Verfahren beschrieben worden sind. Das erfindungsgemäße System zur Abschätzung von Reibwerten der Räder eines Kraftfahrzeugs kann hierbei zudem entweder als mobile oder zumindest teilweise mobile Einheit gebildet- oder auch in ein Kraftfahrzeug integriert sein. Die innerhalb des gegenständlichen Systems integrierte Detektionseinheit kann ferner insbesondere Sensoren zur Bestimmung aktueller Drehzahlen oder dergleichen aufweisen. Die innerhalb des gegenständlichen Systems vorgesehene Verarbeitungseinheit kann neben einer Abschätzung zumindest eines aktuellen Reibwertes ferner zur Erstellung einer Prognose zur Abschätzung eines aktuellen und/oder zukünftigen Zustands eines Kraftfahrzeugs vorgesehen sein. Um eine flexible, unkomplizierte und effiziente Kommunikation der einzelnen Systemkomponenten des gegenständliche Systems zu gewährleisten, können die einzelnen Systemkomponenten vorzugsweise mittels einer Kommunikations- und Steuerleitung - oder im Rahmen einer flexibel und einfach integrierbaren Ausführung drahtlos bzw. kontaktlos über WLAN, Bluetooth, NFC, Zigbee oder dergleichen verbunden sein.

Ebenfalls Gegenstand der Erfindung ist zudem ein Kraftfahrzeug, umfassend ein zuvor beschriebenes System zur Abschätzung von Reibwerten der Räder eines Kraftfahrzeugs.

Weitere Vorteile Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen:
- Fig. 1: eine schematische Darstellung der einzelnen Schritte eines erfindungsgemäßen Verfahrens zur Abschätzung von Reibwerten der Räder eines Kraftfahrzeugs,
- Fig. 2: schematische Darstellung des Verlaufs der erfindungsgemäßen Änderung eines Radmomentes an der Beobachtungsachse während einer gleichzeitigen Anpassung eines Radmomentes an der Kompensationsachse im Falle eines vorbestimmten konstanten Gesamtradmomentes,
- Fig. 3: schematische Darstellung des Verlaufs der erfindungsgemäßen Änderung eines Radmomentes an der Beobachtungsachse während einer gleichzeitigen Anpassung eines Radmomentes an der Kompensationsachse im Falle eines vorbestimmten variierenden Gesamtradmomentes,
- Fig. 4: schematische Darstellung eines erfindungsgemäßen Systems zur Abschätzung von Reibwerten der Räder eines Kraftfahrzeugs im Zustand der Festlegung der Vorderachse als Beobachtungsachse und der Hinterachse als Kompensationsachse,
- Fig. 5: schematische Darstellung eines erfindungsgemäßen Systems zur Abschätzung von Reibwerten der Räder eines Kraftfahrzeugs im Zustand der Festlegung der Hinterachse als Beobachtungsachse und der Vorderachse als Kompensationsachse.

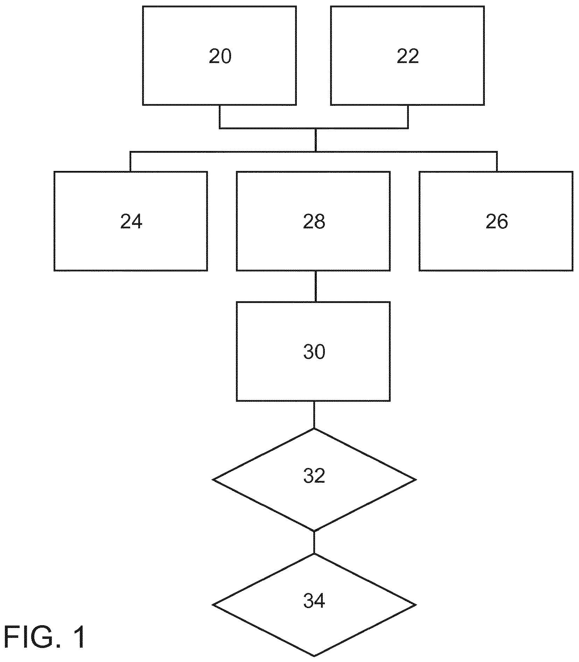

Fig. 1 zeigt eine schematische Darstellung der einzelnen Schritte eines erfindungsgemäßen Verfahrens zur Abschätzung 30 von Reibwerten der Räder 8 eines Kraftfahrzeugs 3. Voraussetzung zur Ausführung des gegenständlichen Verfahrens ist es hierbei, dass das Kraftfahrzeug 3 zumindest zwei unabhängig voneinander betreibbare Achsen 10, 12 aufweist. Hierbei findet in einem ersten Schritt zunächst ein Festlegen 20 zumindest einer Achse 10, 12 eines Kraftfahrzeugs 3 als Beobachtungsachse 10, während einer gleichzeitigen Festlegung 22 zumindest einer von der Beobachtungsachse 10 verschiedenen Achse 10, 12 des Kraftfahrzeugs 3 als Kompensationsachse 12 statt. In einem zweiachsigen Fahrzeug 3 können die Achsen 10, 12 des Fahrzeugs 3 hierbei vorzugsweise in vorbestimmten zeitlichen Abständen jeweils alternierend als Beobachtungsachse 10 und als Kompensationsachse 12 festgelegt werden, sodass alternierend an jedem Reifen 8 des Kraftfahrzeugs 3 der aktuelle Reibwert ermittelt werden kann.

In einem anschließenden, auf die Festlegung 20, 22 der Beobachtungsachse 10 bzw. der Kompensationsachse 12 folgenden Schritt des erfindungsgemäßen Verfahrens erfolgt vorliegend eine Änderung 24 zumindest eines Radmomentes 2 an der Beobachtungsachse 10. Diese Änderung 24 kann beispielsweise kontinuierlich erfolgen, sodass das Radmoment 2 an der Beobachtungsachse 10 z.B. kontinuierlich erhöht oder erniedrigt wird. Ferner kann die Änderung 24 innerhalb eines vorbestimmten Intervalls (I), insbesondere stufenweise erfolgen, wobei sowohl die Höhe (H), als auch die Breite (T) der einzelnen Stufen (S) variierbar sind und insbesondere an das betreffende anfängliche oder aktuelle Gesamtradmoment 6 angepasst werden können.

In einem zeitgleich erfolgenden Schritt erfolgt gemäß dem erfindungsgemäßen Verfahren ein Anpassen 26 zumindest eines Radmomentes 4 an der Kompensationsachse 12. Hierbei erfolgt das Anpassen 26 des zumindest einen Radmomentes 4 an der Kompensationsachse 12 derart, dass ein vorbestimmtes Gesamtradmoment 6 während der Änderung 24 des Radmomentes 2 an der Beobachtungsachse 10 erhalten bleibt. Hierdurch ist es möglich, besonders gute Bedingungen zur Abschätzung von Reibwerten der Räder 8 eines Kraftfahrzeugs 3 zu schaffen, insbesondere indem die Stufen (S) horizontale Abschnitte (T) umfassen, an denen das Radmoment (R) konstant ist, sodass über das Durchstimmen innerhalb eines Intervalls (I) genügend lange Zeitpunkte konstanter Radkraft in die Schätzung einfließen.

Während der Änderung 24 zumindest eines Radmomentes 2 an der Beobachtungsachse 10 sowie der gleichzeitigen Anpassung 26 zumindest eines Radmomentes 4 an der Kompensationsachse 12 erfolgt gegenständlich ein Erfassen 28 von Daten zur Abschätzung 30 von aktuellen Reibwerten. Das Erfassen 28 von Daten zur Abschätzung 30 von Reibwerten kann hierbei insbesondere mittels einer Detektionseinheit 36, umfassend Sensoren 36' erfolgen, die beispielsweise die Drehzahl an den Rädern 8 eines Kraftfahrzeugs 3 messen können.

In einem abschließenden Schritt erfolgt schließlich die Abschätzung 30 zumindest eines aktuellen Reibwertes auf Basis der erfassten Daten. Diese Abschätzung 30 kann vorzugsweise mittels einer Verarbeitungseinheit 38 durchgeführt werden

Wahlweise kann nach der Abschätzung 30 zumindest eines aktuellen Reibwertes auf Basis der erfassten Daten noch eine Prognose 32 zur Abschätzung eines aktuellen Zustands eines Kraftfahrzeugs 3, insbesondere eines Zustands im Hinblick auf eine Fahrzeugsicherheit eines Kraftfahrzeugs 3 mittels einer Verarbeitungseinheit 38 erstellt werden. Alternativ oder kumulativ kann eine solche Prognose 32 auch zur Abschätzung eines zukünftigen Zustands eines Kraftfahrzeugs 3 erfolgen.

Schließlich ist es in einem weiteren optionalen Schritt möglich, auf Basis der Prognose zur Abschätzung eines aktuellen bzw. zukünftigen Zustands eines Kraftfahrzeugs 3, den Betrieb eines Kraftfahrzeugs 3 anzupassen oder zu modifizieren. Hierzu können vorteilhafterweise weitere Daten, wie Navigationsdaten und/oder Streckendaten und/oder kartographische Daten und/oder Daten aktueller Umgebungsbedingungen oder dergleichen hinzugezogen werden.

Eine Anpassung 34 des Betriebs eines Fahrzeugs 3 kann hierbei insbesondere von weiteren Systemen, wie einem Notbremssystem, einem Fahrassistenzsystem, einem automatischen Ausweichsystem, einem Schlupfregelsystem einem elektronischen Stabilitätsprogramm oder dergleichen vorgenommen werden. Alternativ oder kumulativ zur Anpassung eines Betriebs in Abhängigkeit der Prognose kann vorliegend auch eine Aussendung bzw. Anzeige eines Warnhinweises oder dergleichen erfolgen.

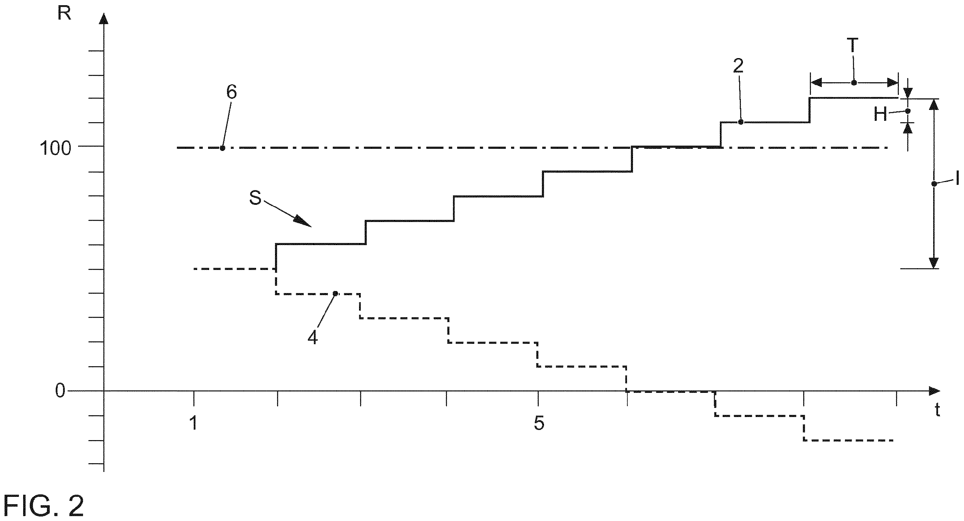

Fig. 2 zeigt eine schematische Darstellung des Verlaufs der erfindungsgemäßen Änderung eines Radmomentes 2 an der Beobachtungsachse 10 während einer gleichzeitigen Anpassung eines Radmomentes 4 an der Kompensationsachse 12 im Falle eines vorbestimmten konstanten Gesamtradmomentes 6. Auf der x-Achse der vorliegenden Auftragung ist die Zeit t aufgetragen, während auf der y-Achse des vorliegend dargestellten zweidimensionalen Koordinatensystems das Radmoment (R) aufgetragen ist. Das Radmoment 2 an der Beobachtungsachse 10 wird vorliegend stufenweise durchmoduliert und steigt von einem Ausgangswert von ca. 50 % bis zu einem Wert von ca. 120 % des anfänglichen Gesamtradmomentes 6 an. Die einzelnen Stufen (S) des Verlaufs des Radmomentes 2 an der Beobachtungsachse 10 umfassen einen horizontalen Abschnitt (T) sowie einen vertikalen Abschnitt (H). Vorliegend entspricht der horizontale Abschnitt (H) einer Stufe (S) ca. 1 Sekunde, kann aber beispielsweise auch 3 Sekunden betragen, wohingegen der vertikale Abschnitt (H) einer Stufe (S) 10 % des anfänglichen Gesamtradmomentes 6 entspricht. Das während der vorliegenden Modulation durchgestimmte Intervall (I) umfasst ca. 70 % des anfänglichen Gesamtradmomentes (6). Nach einer Zeit von ca. 7 Sekunden übersteigt das Radmoment 2 an der Beobachtungsachse 10 den Wert des Gesamtradmomentes 6, was nur möglich ist, wenn an der Kompensationsachse 12 ein entsprechendes negatives Moment wirkt, beispielsweise durch Rekuperation oder den Motor im Schleppbetrieb. Entsprechend dem vorliegend gewünschten konstanten vorbestimmten Gesamtradmoment 6 entspricht der Verlauf des Radmomentes 4 an der Kompensationsachse 12 exakt dem negativen Verlauf des Verlaufs des Radmomentes 2 an der Beobachtungsachse 10.

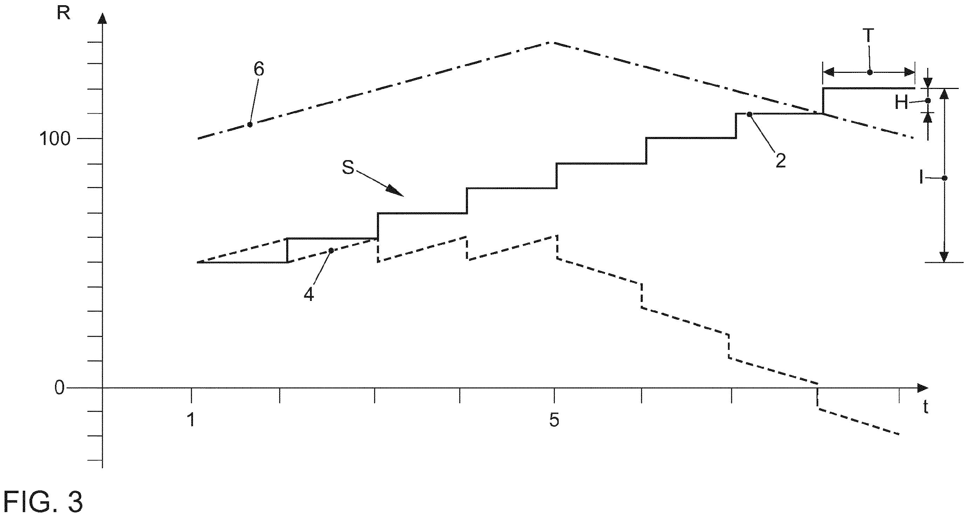

Fig. 3 zeigt eine schematische Darstellung des Verlaufs der erfindungsgemäßen Änderung eines Radmomentes 2 an der Beobachtungsachse 10 während einer gleichzeitigen Anpassung eines Radmomentes 4 an der Kompensationsachse 12 im Falle eines vorbestimmten variierenden Gesamtradmomentes 6. Hierbei entspricht der Verlauf des Radmomentes 2 an der Beobachtungsachse 12 exakt dem Verlauf aus Fig. 2. Aufgrund des vorbestimmten variierenden Gesamtradmomentes 6, das zunächst von einem Ausgangswert von 100 % des anfänglichen Gesamtradmomentes 6 auf einen Wert von 140 % ansteigt und danach wieder auf einen Wert von 100 % sinkt, entspricht der Verlauf des Radmomentes 4 an der Kompensationsachse 12 nicht dem Verlauf gemäß Fig. 2. Vielmehr steigt das Radmoment 4 an der Kompensationsachse 12 während eines Schrittes (S) jeweils bis zu einer Zeit von ca. 5 Sekunden um 10 % des anfänglichen Gesamtradmomentes 6 an, bevor es in jedem Schritt wieder um 10 % sinkt. Nach Erreichen des höchsten Punktes des vorbestimmten variablen Gesamtradmomentes 6 nach ca. 5 Sekunden sinkt entsprechend auch das Radmoment 4 an der Kompensationsachse 12 mit jedem Schritt (S) fortlaufend ab.

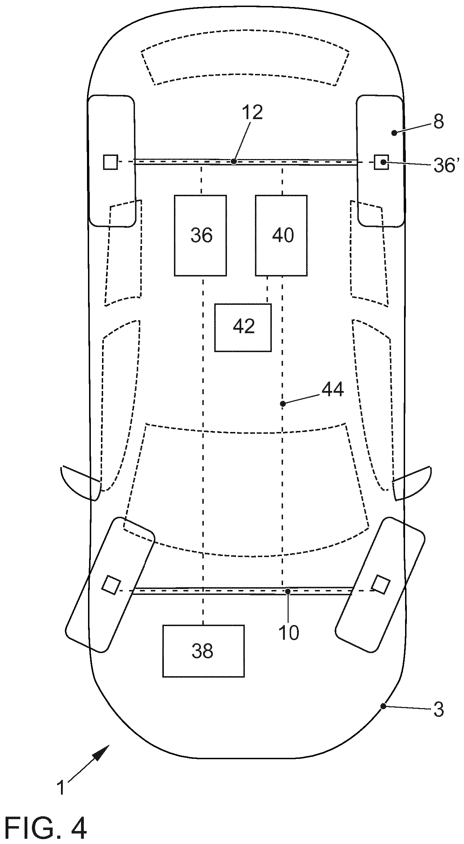

Fig. 4 zeigt schematische Darstellung eines erfindungsgemäßen Systems 1 zur Abschätzung 30 von Reibwerten der Räder 8 eines Kraftfahrzeugs 3 im Zustand der Festlegung der Vorderachse als Beobachtungsachse 10 und der Hinterachse als Kompensationsachse 12. Das vorliegend in einem Kraftfahrzeug 3 integrierte System 1 weist eine Kontrolleinheit 42 zur Festlegung 20, 22 zumindest einer Achse des Kraftfahrzeugs 3 als Beobachtungsachse 10 sowie einer von der Beobachtungachse 10 verschiedenen Achse als Kompensationsachse 12 auf. Ferner umfasst das erfindungsgemäße System 1 eine Steuereinheit 40 zur Änderung 24 zumindest eines Radmomentes 2 an der Beobachtungsachse 10, die vorliegend die Vorderachse des Kraftfahrzeugs 3 darstellt. Neben der Änderung 24 zumindest eines Radmomentes 2 an der Beobachtungsachse 10 ist die Steuereinheit 40 ebenfalls zur gleichzeitigen Anpassung 26 zumindest eines Reibwertes 4 an der Kompensationsachse 12, die vorliegend in Form der Hinterachse des Kraftfahrzeugs 3 gebildet ist, vorgesehen, wobei die Steuereinheit 40 vorliegend derart eingerichtet und innerhalb des Systems 1 angeordnet ist, dass eine Anpassung 26 des zumindest einen Radmomentes 2 an der Kompensationsachse 12 an ein vorbestimmtes Gesamtradmoment 6 erfolgt. Des Weiteren umfasst das erfindungsgemäße System 1 zumindest eine Detektionseinheit 36 zur Erfassung 28 von Daten zur Abschätzung 30 von aktuellen Reibwerten der Räder 8 eines Kraftfahrzeugs 3 während der Änderung 24 zumindest eines Radmomentes 2 an der Beobachtungsachse 10. Die Detektionseinheit 36 umfasst hierbei insbesondere Sensoren 36`, die beispielsweise die aktuelle Drehzahl oder dergleichen messen und vorliegend an jedem Rad 8 angeordnet sind. Die von der Detektionseinheit 36 erfassten Daten zur Abschätzung 30 von aktuellen Reibwerten werden anschließend an eine Verarbeitungseinheit 38 zur Abschätzung 30 zumindest eines aktuellen Reibwertes auf Basis der erfassten Daten weitergegeben. Vorteilhafterweise können die einzelnen Systemkomponenten 36, 38, 40, 42 im Rahmen einer kompakten Anordnung auch zumindest teilweise zusammengefasst werden bzw. in eine Kontrolleinheit oder dergleichen integriert werden.

Um eine effektive Kommunikation zwischen den einzelnen Systemkomponenten zu gewährleisten, sind die einzelnen Systemkomponenten vorliegend mittels einer Kommunikations- und Steuerleitung 44 verbunden. Im Rahmen einer flexiblen und einfach integrierbaren Ausführung kann ebenso vorgesehen sein, dass die einzelnen Systemkomponenten drahtlos bzw. kontaktlos über WLAN, Bluetooth, NFC, Zigbee oder dergleichen verbunden sind.

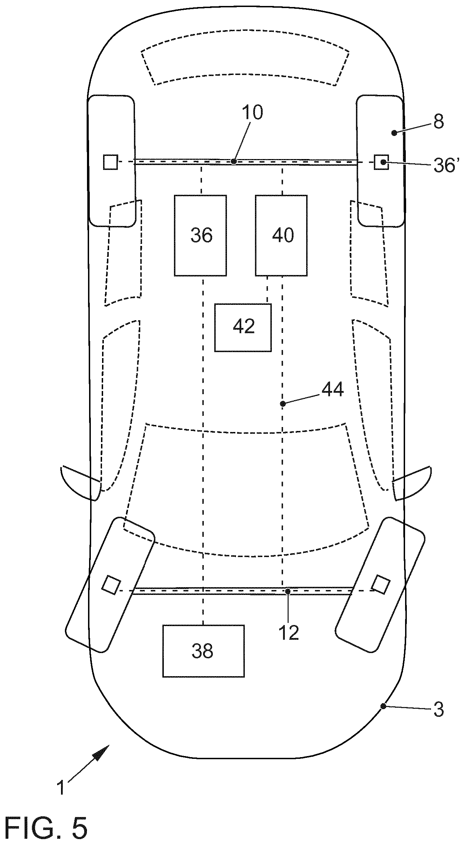

Fig. 5 zeigt eine schematische Darstellung eines erfindungsgemäßen Systems 1 zur Abschätzung 30 von Reibwerten der Räder 8 eines Kraftfahrzeugs 3. Fig. 5 zeigt hierbei die gleiche Darstellung wie Fig. 4, mit dem einzigen Unterschied, dass gemäß Fig. 5 nicht die Vorderachse, sondern die Hinterachse des Kraftfahrzeugs 3 als Beobachtungsachse 10 und entsprechend die Vorderachse als Kompensationsachse 12 festgelegt ist. Im Rahmen einer zyklisch wechselnden Festlegung 20, 22 der Vorder- und Hinterachse als Kompensations- bzw. Beobachtungsachse 12, 10, kann vorliegend an jedem Reifen 8 des Kraftfahrzeugs 3 der aktuelle Reibwert ermittelt werden.

Mittels dem erfindungsgemäßen Verfahren sowie dem erfindungsgemäßen System 1 zur Abschätzung 30 von Reibwerten der Räder 8 eines Kraftfahrzeugs 3 ist es insbesondere möglich, eine schnelle, aktuelle und qualitativ hochwertige Schätzung 30 von Reibwerten der Räder 8 eines Kraftfahrzeugs 3 vorzunehmen, die insbesondere den innerhalb von Kraftfahrzeugen 3 angeordneten sicherheitsrelevanten Steuersystemen eine bessere Steuerung ermöglicht.

### Bezugszeichenliste

- 1: System zur Abschätzung von Reibwerten
- 2: Radmoment an der Beobachtungsachse
- 3: Kraftfahrzeug
- 4: Radmoment an der Kompensationsachse
- 6: Gesamtradmoment/Soll-Gesamtradmoment
- 8: Rad
- 10: Beobachtungsachse
- 12: Kompensationsachse
- 20: Festlegen einer Achse als Beobachtungsachse
- 22: Festlegen einer Achse als Kompensationsachse
- 24: Änderung des Radmomentes an der Beobachtungsachse
- 26: Anpassen eines Radmomentes an der Kompensationsachse
- 28: Erfassen von Daten
- 30: Abschätzung eines aktuellen Reibwertes
- 32: Erstellen einer Prognose
- 34: Anpassung des Betriebs
- 36: Detektionseinheit
- 36': Sensoren
- 38: Verarbeitungseinheit
- 40: Steuereinheit
- 42: Kontrolleinheit
- 44: Kommunikations- und Steuerleitung

- I: Intervall
- S: Stufe
- T: horizontaler Abschnitt
- H: vertikaler Abschnitt
- R: Radmoment

## Patentansprüche

1. Verfahren zur Abschätzung (30) von Reibwerten der Räder (8) eines Kraftfahrzeugs (3) mit zumindest zwei unabhängig voneinander betreibbaren Achsen, umfassend die Schritte:
- Festlegen (20) zumindest einer Achse eines Kraftfahrzeugs (3) als Beobachtungsachse (10),
- Festlegen (22) zumindest einer von der Beobachtungsachse (10) verschiedenen Achse des Kraftfahrzeugs (3) als Kompensationsachse (12),
- Ändern (24) zumindest eines Radmomentes (2) an der Beobachtungsachse (10),
- Erfassen (28) von Daten zur Abschätzung von aktuellen Reibwerten während der Änderung (24) zumindest eines Radmomentes (2) an der Beobachtungsachse (10),
- gleichzeitiges Anpassen (26) zumindest eines Radmomentes (4) an der Kompensationsachse (12) während der Änderung (24) zumindest eines Radmomentes (2) an der Beobachtungsachse (10),
- wobei das Anpassen (26) des zumindest einen Radmomentes (4) an der Kompensationsachse (12) derart erfolgt, dass ein vorbestimmtes Gesamtradmoment (6) während der Änderung des Radmomentes (2) an der Beobachtungsachse (10) erhalten bleibt,
- Abschätzung (30) zumindest eines aktuellen Reibwertes auf Basis der erfassten Daten,
- **dadurch gekennzeichnet, dass** die Änderung (24) zumindest eines Radmomentes (2) an der Beobachtungsachse (10) stufenweise erfolgt, wobei die Stufen (S) horizontale Abschnitte (T) umfassen, an denen das Radmoment (R) an der Beobachtungsachse (2) konstant ist.

2. Verfahren nach Anspruch 1,
wobei die Änderung (24) zumindest eines Radmomentes (2) an der Beobachtungsachse (10) innerhalb eines vorbestimmbaren Intervalls (I) erfolgt.

3. Verfahren nach einem der vorangehenden Ansprüche,
wobei das Radmoment (2) an der Beobachtungsachse (10) stufenweise, in horizontalen Abschnitten (T) von zumindest 1 Sekunde geändert wird, wobei die Höhe der Änderung (24) eines vertikalen Abschnitts (H) zumindest 10% des vor Einleitung des Verfahrens messbaren Gesamtradmoments (6) beträgt.

4. Verfahren nach einem der vorangehenden Ansprüche,
wobei der horizontale Abschnitt (T) und/oder der vertikale Abschnitt (H) der stufenweisen Änderung (24) des Radmomentes (2) an der Beobachtungsachse (10) in Abhängigkeit des aktuellen Gesamtradmomentes (6) variiert wird.

5. Verfahren nach einem der vorangehenden Ansprüche,
wobei die Summe des aktuellen Radmomentes (2) an der Beobachtungsachse (10) und des aktuellen Radmomentes (4) an der Kompensationsachse (12) das aktuell vorgegebene Soll-Gesamtradmoment (6) ergeben.

6. Verfahren nach einem der vorangehenden Ansprüche,
wobei das Radmoment (2) an der Beobachtungsachse (10) derart geändert wird, dass der Betrag des Radmoments (2) größer ist, als der Betrag des Gesamtradmoments (6).

7. Verfahren nach einem der vorangehenden Ansprüche,
wobei auf Basis der erfassten Daten zur Abschätzung (30) eines aktuellen Reibwertes eine Prognose (32) zur Abschätzung eines aktuellen Zustands eines Kraftfahrzeugs (3) mittels einer Verarbeitungseinheit (38) erstellt wird.

8. System (1) zur Abschätzung (30) von Reibwerten der Räder (8) eines Kraftfahrzeugs (3) mit zumindest zwei unabhängig voneinander betreibbaren Achsen, umfassend
- zumindest eine Kontrolleinheit (42) zur Festlegung (20, 22) zumindest einer Achse als Beobachtungsachse (10) sowie einer von der Beobachtungsachse (10) verschiedenen Achse als Kompensationsachse (12),
- zumindest eine Steuereinheit (40) zur Änderung (24) zumindest eines Radmomentes (2) an der Beobachtungsachse (10) sowie zur gleichzeitigen Anpassung (26) zumindest eines Radmomentes (4) an der Kompensationsachse (12), wobei zumindest ein Radmoment (2) an der Beobachtungsachse (10) stufenweise verändert wird, wobei die Stufen (S) horizontale Abschnitte (T) umfassen, an denen das Radmoment (R) an der Beobachtungsachse (2) konstant ist,
- zumindest eine Detektionseinheit (36) zur Erfassung (28) von Daten zur Abschätzung (30) von aktuellen Reibwerten während der Änderung (24) zumindest eines Radmomentes (2) an der Beobachtungsachse (10),
- zumindest eine Verarbeitungseinheit (38) zur Abschätzung (30) zumindest eines aktuellen Reibwertes auf Basis der erfassten Daten,
- wobei die Steuereinheit (40) derart eingerichtet und innerhalb des Systems (1) angeordnet ist, dass eine Anpassung (26) des zumindest einen Radmomentes (2) an der Kompensationsachse (12) an ein vorbestimmtes Gesamtradmoment (6) erfolgt.

9. Kraftfahrzeug (3), umfassend ein System (1) zur Bestimmung von Reibwerten nach Anspruch 8.

## Claims

1. Method for estimating (30) friction coefficients of the wheels (8) of a motor vehicle (3) with at least two axles which can be operated independently of each other, comprising the steps of:
- defining (20) at least one axle of a motor vehicle (3) as a monitored axle (10),
- defining (22) at least one axle of the motor vehicle (3) which differs from the monitored axle (10) as a compensation axle (12),
- changing (24) at least one wheel torque (2) on the monitored axle (10),
- capturing (28) data in order to estimate current friction coefficients while changing (24) at least one wheel torque (2) on the monitored axle (10),
- simultaneously adapting (26) at least one wheel torque (4) on the compensation axle (12) while changing (24) at least one wheel torque (2) on the monitored axle (10),
- wherein adapting (26) the at least one wheel torque (4) on the compensation axle (12) is performed in such a way that a predetermined total wheel torque (6) is maintained while changing the wheel torque (2) on the monitored axle (10),
- estimating (30) at least one current friction coefficient on the basis of the captured data, **characterized in that**
- changing (24) at least one wheel torque (2) on the monitored axle (10) is performed in steps, wherein the steps (S) comprise horizontal portions (T) on which the wheel torque (R) on the monitored axle (2) is constant.

2. Method according to Claim 1,
wherein
changing (24) at least one wheel torque (2) on the monitored axle (10) is performed within a predeterminable interval (I).

3. Method according to either of the preceding claims, wherein
the wheel torque (2) on the monitored axle (10) is changed in steps, in horizontal portions (T) of at least 1 second, wherein the level of the change (24) in a vertical portion (H) is at least 10% of the total wheel torque (6) measurable before initiation of the method.

4. Method according to one of the preceding claims, wherein
the horizontal portion (T) and/or the vertical portion (H) of the stepwise change (24) in the wheel torque (2) on the monitored axle (10) is varied depending on the current total wheel torque (6).

5. Method according to one of the preceding claims, wherein
the sum of the current wheel torque (2) on the monitored axle (10) and the current wheel torque (4) on the compensation axle (12) gives the currently specified target total wheel torque (6).

6. Method according to one of the preceding claims, wherein
the wheel torque (2) on the monitored axle (10) is changed in such a way that the absolute value of the wheel torque (2) is greater than the absolute value of the total wheel torque (6).

7. Method according to one of the preceding claims,
wherein
a forecast (32) for estimating a current state of a motor vehicle (3) is created by means of a processing unit (38) on the basis of the captured data for estimating (30) a current friction coefficient.

8. System (1) for estimating (30) friction coefficients of the wheels (8) of a motor vehicle (3) with at least two axles which can be operated independently of each other, comprising
- at least one controller unit (42) for defining (20, 22) at least one axle as a monitored axle (10) and one axle which differs from the monitored axle (10) as a compensation axle (12),
- at least one control unit (40) for changing (24) at least one wheel torque (2) on the monitored axle (10) and for simultaneously adapting (26) at least one wheel torque (4) on the compensation axle (12), wherein at least one wheel torque (2) on the monitored axle (10) is changed in steps,
wherein
the steps (S) comprise horizontal portions (T) on which the wheel torque (R) on the monitored axle (2) is constant,
- at least one detection unit (36) for capturing (28) data for estimating (30) current friction coefficients while changing (24) at least one wheel torque (2) on the monitored axle (10),
- at least one processing unit (38) for estimating (30) at least one current friction coefficient on the basis of the captured data,
- wherein the control unit (40) is designed and arranged within the system (1) in such a way that adapting (26) the at least one wheel torque (2) on the compensation axle (12) to a predetermined total wheel torque (6) is performed.

9. Motor vehicle (3), comprising a system (1) for determining friction coefficients according to Claim 8.

## Revendications

1. Procédé d'estimation (30) de coefficients de frottement des roues (8) d'un véhicule automobile (3), pourvu d'au moins deux essieux utilisables indépendamment l'un de l'autre, comprenant les étapes suivantes :
- spécification (20) d'au moins un essieu d'un véhicule automobile (3) en tant qu'essieu témoin (10),
- spécification (22) d'au moins un essieu du véhicule automobile (3), différent de l'essieu témoin (10), en tant qu'essieu de compensation (12),
- modification (24) d'au moins un moment de roue (2) sur l'essieu témoin (10),
- acquisition (28) de données servant à l'estimation des coefficients de frottement actuels pendant la modification (24) d'au moins un moment de roue (2) sur l'essieu témoin (10),
- adaptation (26) simultanée d'au moins un moment de roue (4) sur l'essieu de compensation (12) pendant la modification (24) d'au moins un moment de roue (2) sur l'essieu témoin (10),
- l'adaptation (26) de l'au moins un moment de roue (4) sur l'essieu de compensation (12) s'effectuant de telle sorte qu'un moment de roue total (6) prédéterminé reste maintenu pendant la modification du moment de roue (2) sur l'essieu témoin (10),
- estimation (30) d'au moins un coefficient de frottement actuel sur la base des données acquises,
- **caractérisé en ce que** la modification (24) d'au moins un moment de roue (2) sur l'essieu témoin (10) s'effectue par paliers, les paliers (S) comportant des portions horizontales (T) au niveau desquelles le moment de roue (R) au niveau de l'essieu témoin (2) est constant.

2. Procédé selon la revendication 1, la modification (24) d'au moins un moment de roue (2) sur l'essieu témoin (10) s'effectuant au sein d'un intervalle (I) pouvant être prédéterminé.

3. Procédé selon l'une des revendications précédentes, le moment de roue (2) au niveau de l'essieu témoin (10) étant modifié par paliers, en portions horizontales (T) d'au moins 1 seconde, la hauteur de la modification (24) d'une portion verticale (H) étant égale à au moins 10 % du moment de roue total (6) mesurable avant l'initiation du procédé.

4. Procédé selon l'une des revendications précédentes, la portion horizontale (T) et/ou la portion verticale (H) de la modification (24) par paliers du moment de roue (2) sur l'essieu témoin (10) variant en fonction du moment de roue total (6) actuel.

5. Procédé selon l'une des revendications précédentes, la somme du moment de roue (2) actuel sur l'essieu témoin (10) et du moment de roue (4) actuel sur l'essieu de compensation (12) produisant le moment de roue total (6) de consigne actuellement prédéfini.

6. Procédé selon l'une des revendications précédentes, le moment de roue (2) sur l'essieu témoin (10) étant modifié de telle sorte que le montant du moment de roue (2) est supérieur au moment de roue total (6).

7. Procédé selon l'une des revendications précédentes, une prévision (32) destinée à estimer un état actuel d'un véhicule automobile (3) étant établie au moyen d'une unité de traitement (38) sur la base des données acquises pour l'estimation (30) d'un coefficient de frottement actuel.

8. Système (1) destiné à l'estimation (30) de coefficients de frottement des roues (8) d'un véhicule automobile (3), pourvu d'au moins deux essieux utilisables indépendamment l'un de l'autre, comprenant
- au moins une unité de commande (42) destinée à spécifier (20, 22) au moins un essieu en tant qu'essieu témoin (10) ainsi qu'un essieu, différent de l'essieu témoin (10), en tant qu'essieu de compensation (12),
- au moins une unité de commande (40) destinée à modifier (24) au moins un moment de roue (2) sur l'essieu témoin (10) ainsi qu'à adapter (26) simultanément au moins un moment de roue (4) sur l'essieu de compensation (12), au moins un moment de roue (2) sur l'essieu témoin (10) étant modifié par paliers, les paliers (S) comportant des portions horizontales (T) au niveau desquelles le moment de roue (R) au niveau de l'essieu témoin (2) est constant,
- au moins une unité de détection (36) destinée à acquérir (28) des données servant à l'estimation (30) des coefficients de frottement actuels pendant la modification (24) d'au moins un moment de roue (2) sur l'essieu témoin (10),
- au moins une unité de traitement (38) destinée à estimer (30) au moins un coefficient de frottement actuel sur la base des données acquises,
- l'unité de commande (40) étant conçue et disposée à l'intérieur du système (1) de telle sorte qu'une adaptation (26) de l'au moins un moment de roue (2) sur l'essieu de compensation (12) s'effectue à un moment de roue total (6) prédéterminé.

9. Véhicule automobile (3), comprenant un système (1) destiné à déterminer des coefficients de frottement selon la revendication 8.
